# FASCICULE DE BREVET EUROPEEN

(11) **EP 3 118 529 B1**
(45) Date de publication et mention de la délivrance du brevet: **29.11.2017**
(21) Numéro de dépôt: 16175699.4
(22) Date de dépôt: 22.06.2016
(51) Int. Cl.: F24D 5/02, F24D 5/04, F24D 17/00, F24F 5/00, F24F 11/00

(54) **SYSTÈME DE CHAUFFAGE ET DE PRODUCTION D'EAU CHAUDE DANS UNE HABITATION**
SYSTEM ZUM HEIZEN UND ZUR WARMWASSERBEREITUNG IN EINER WOHNUNG
SYSTEM FOR HEATING AND HOT-WATER PRODUCTION IN A DWELLING

(30) Priorité: 16.07.2015 FR 1556735
(43) Date de publication de la demande: 18.01.2017
(73) Titulaire: Atlantic Climatisation et Ventilation, 69330 Meyzieu (FR)
(72) Inventeur: DEMIA, Laurent, 01120 MONTLUEL (FR); BRAMKAMP, Uwe, 44470 CARQUEFOU (FR); WURTZ, Etienne, 73000 CHAMBERY (FR); OUVRIER BONNAZ, Ophélie, 38660 Sainte-Marie-du-Mont (FR)
(74) Mandataire: Lenne, Laurence

(56) Documents cités:
- EP-A1- 2 442 041
- EP-A1- 2 444 748
- FR-A1- 2 941 521
- FR-A1- 2 979 418
- FR-A1- 2 982 345
- FR-A1- 2 998 353

## Description

L'invention concerne un système de chauffage et de production d'eau chaude dans une habitation.

Comme précisé dans le document de brevet FR 2 998 353 qui concerne plus précisément un dispositif de rafraichissement de l'air dans une habitation par intégration d'une ventilation mécanique contrôlée double flux d'insufflation avec un chauffe-eau thermodynamique sur air extrait, il existe également des chauffe-eau thermodynamiques permettant de produire de l'eau chaude sanitaire et complètement indépendants des ventilations mécaniques contrôlées double flux. Les chauffe-eau sur l'air extrait utilisent l'énergie de l'air extrait de l'habitation pour chauffer l'eau. L'air extrait est ensuite rejeté à l'extérieur après avoir été refroidi en passant sur l'évaporateur du chauffe-eau.

Un tel système nécessite en pratique une installation de la ventilation mécanique contrôlée double flux et du chauffe-eau thermodynamique dans un volume chauffé pour éviter les déperditions thermiques et assurer un bon fonctionnement et donc un regroupement des réseaux de gaines de la ventilation mécanique contrôlée double flux et du chauffe-eau thermodynamique. Ces réseaux de gaines regroupés entraînent de nombreuses contraintes et difficultés d'installation.

Par ailleurs, dans une habitation, on peut définir des pièces à vivre telles que les pièces de séjour et les chambres, et des pièces humides, telles que les WC, les cuisines et les salles de bain, et il importe de gérer la qualité de l'air intérieur tout autant dans les unes que dans les autres.

L'invention résout ces problèmes tout en assurant cette gestion de la qualité d'air intérieur.

Pour ce faire, elle propose un système de chauffage et de production d'eau chaude destiné à être installé dans une habitation comportant des pièces à vivre et des pièces humides en communication d'air, système comportant un groupe de ventilation mécanique contrôlée d'insufflation connecté en amont à l'extérieur et un chauffe-eau thermodynamique connecté en aval à l'extérieur, physiquement indépendants, caractérisé en ce que ledit groupe de ventilation mécanique contrôlée d'insufflation est à simple flux et est connecté en aval auxdites pièces à vivre, en ce que ledit chauffe-eau est connecté en amont sur l'air extrait desdites pièces humides et en ce qu'il comporte un dispositif de commande du débit assurant la commande du débit d'air insufflé par ledit groupe de ventilation mécanique contrôlée et du débit d'air extrait dudit chauffe-eau.

Par groupe de ventilation mécanique contrôlée d'insufflation et chauffe-eau thermodynamique « physiquement indépendants », il est entendu des structures physiques de groupe de ventilation et de chauffe-eau indépendantes et non intégrées l'une à l'autre.

Un tel système permet de réduire les contraintes d'installation de gaines de réseaux et assure une grande flexibilité. La puissance de chauffage peut être adaptée aux besoins du bâtiment dans le cas de rénovation comme dans le cas d'un bâtiment neuf.

La gestion de la qualité de l'air et du besoin de chauffage peut être indépendante, par pilotage d'échangeurs ou de générateurs et du débit. Ceci permet entre autre de simplifier le câblage de ces capteurs mesurant la qualité de l'air intérieur.

Le chauffe-eau peut être installé dans le garage de l'habitation, hors du volume chauffé, sans entraîner de grandes pertes thermiques.

Selon un mode de réalisation préféré, ledit groupe de ventilation mécanique contrôlée est disposé dans les combles de l'habitation.

Ledit groupe de ventilation mécanique contrôlée peut comporter en amont une source chaude de préchauffage de l'air extérieur de type panneau solaire ou puits canadien.

Ledit groupe de ventilation mécanique contrôlée peut comporter en aval au moins un échangeur de chaleur. Cet échangeur de chaleur disposé à proximité du diffuseur ne nécessite pas d'installation de grandes longueurs de réseaux.

Ledit groupe de ventilation mécanique contrôlée peut être connecté en amont à de l'air recyclé.

Ledit groupe de ventilation mécanique contrôlée peut comporter un dispositif de réglage de la répartition d'air extérieur extrait et d'air recyclé extrait.

Chaque pièce à vivre peut comporter un échangeur thermodynamique en aval dudit groupe de ventilation mécanique contrôlée, ledit échangeur thermodynamique étant piloté par une sonde d'ambiance présente dans la pièce à vivre correspondante.

L'invention concerne également un procédé de commande du débit d'air insufflé par ledit groupe de ventilation mécanique contrôlée et de l'air extrait dans ledit chauffe-eau, par un dispositif de commande d'un tel système, caractérisé en ce que le débit d'air insufflé par ledit groupe de ventilation mécanique contrôlée et le débit de l'air extrait dans ledit chauffe-eau sont régulés selon le besoin lié à la qualité d'air intérieur dans lesdites pièces à vivre et/ou selon le besoin lié à l'humidité dans lesdites pièces humides.

De préférence, le débit d'air insufflé par ledit groupe de ventilation mécanique contrôlée et le débit de l'air extrait dans ledit chauffe-eau thermodynamique sont régulés pour être sensiblement égaux.

Avantageusement, le débit maximal du débit d'air insufflé par ledit groupe de ventilation mécanique contrôlée et du débit de l'air extrait dans ledit chauffe-eau sont déterminés en fonction dudit besoin lié à la qualité d'air intérieur et ces deux débits sont régulés pour être égaux à ce débit maximal.

L'invention est décrite ci-après plus en détail à l'aide de figures ne représentant que des modes de réalisation préférés de l'invention.

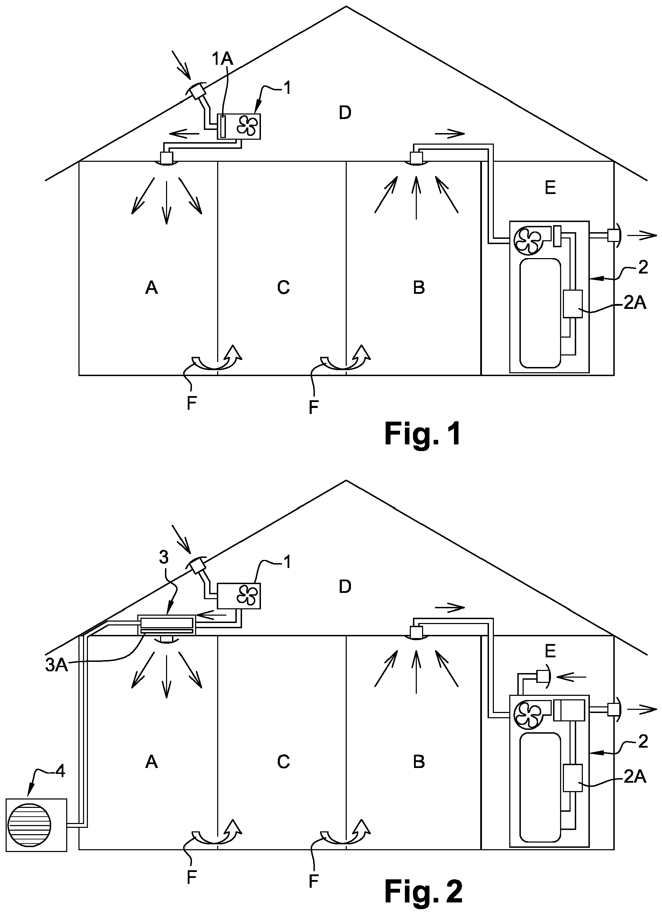

Les figures 1 à 4 sont des vues schématiques d'une habitation équipée d'un système conforme à l'invention, selon ces différents modes de réalisation.

Une habitation, schématisée sur ces figures, comporte des pièces à vivre A telles que les pièces de séjour et les chambres, des pièces humides B, telles que les WC, les cuisines et les salles de bain, des pièces de dégagement C tels que des couloirs, un garage E et des combles D. Seule une pièce de chaque type est représentée sur ces vues schématiques, dans un but de simplification, mais il va de soi qu'il en existe plusieurs éventuellement équipées de la même façon.

Les pièces à vivre A, les dégagements C et les pièces humides B sont en communication d'air schématisée par les flèches F.

Selon un premier mode de réalisation représenté sur la figure 1, un système de chauffage et de production d'eau chaude comporte un groupe de ventilation mécanique contrôlée d'insufflation 1 connecté en amont à l'extérieur et disposé dans les combles D de l'habitation et un chauffe-eau thermodynamique 2 connecté en aval à l'extérieur et disposé dans le garage ou une pièce technique de type buanderie. Ce groupe de ventilation mécanique contrôlée d'insufflation 1 et ce chauffe-eau thermodynamique 2 sont physiquement indépendants. Le groupe de ventilation mécanique contrôlée d'insufflation 1 équipé d'un filtre 1A est à simple flux et est connecté en aval aux pièces à vivre A et le chauffe-eau 2 pourvu d'une unité électronique 2A est connecté en amont sur l'air extrait des pièces humides B.

Ce système comporte un dispositif de commande du débit assurant la commande du débit insufflé par le groupe de ventilation mécanique contrôlée 1 et du débit d'air extrait du chauffe-eau 2.

Le groupe de ventilation mécanique contrôlée 1 peut comporter en amont une source chaude de préchauffage de l'air extérieur, par exemple un panneau solaire, un puits canadien ou une résistance électrique, soit pour une raison de confort soit pour une raison d'économie d'énergie.

Selon un deuxième mode de réalisation représenté sur la figure 2, le groupe de ventilation mécanique contrôlée 1 comporte en aval un échangeur de chaleur 3, de type batterie thermodynamique, équipé d'un filtre 3A.

Il peut être prévu une seule batterie en communication de fluide avec l'ensemble des pièces à vivre A ou, au contraire, il peut y avoir autant de batteries thermodynamiques que de pièces présentes dans la zone identifiée A.

Cette (ces) batterie(s) 3 est (sont) reliée(s) avec une unité extérieure 4 dimensionnée selon les besoins du bâtiment et assurant le chauffage et le rafraîchissement d'au moins une partie des pièces à vivre A.

Plus généralement, cette batterie 3 peut être reliée avec un générateur de chaleur associé à chaque pièce, de type thermodynamique, électrique, à bois ou granulés...

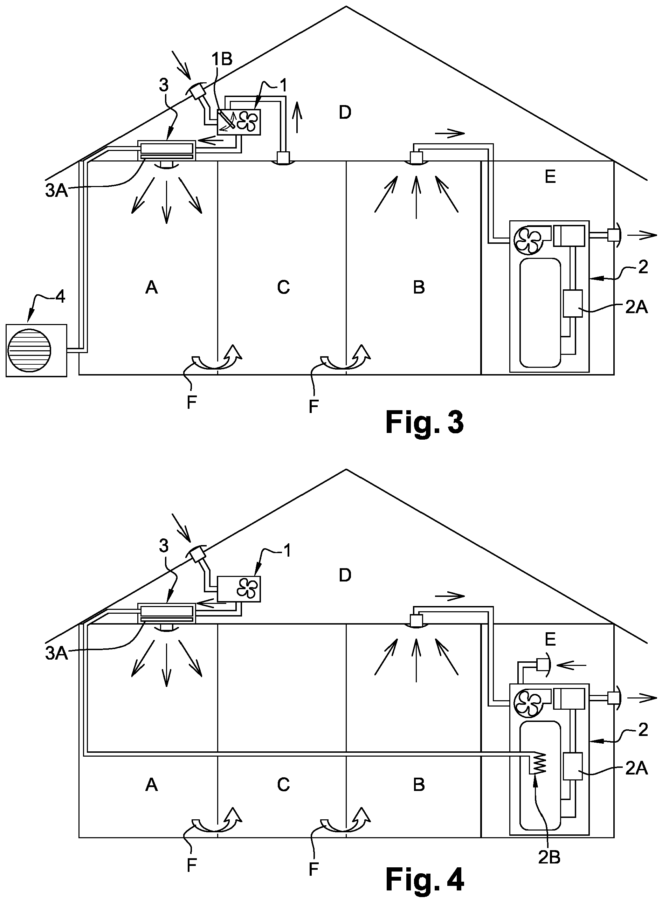

Selon un troisième mode de réalisation représenté sur la figure 3, le groupe de ventilation mécanique contrôlée 1 est connecté en amont à de l'air recyclé provenant d'une des zones A, B ou C mais préférentiellement des pièces de dégagement C et est équipé d'un dispositif de réglage de la répartition d'air extérieur extrait et d'air recyclé extrait, par exemple d'un volet de gestion du recyclage 1B et/ou d'un ventilateur. Le groupe de ventilation mécanique contrôlée 1 comporte en aval un échangeur de chaleur 3, de type batterie thermodynamique, équipé d'un filtre 3A et reliée avec une unité extérieure 4. L'air recyclé peut ainsi également être chauffé ou refroidi pour le confort d'été, avec l'air extérieur insufflé.

On peut noter que cette unité extérieure 4 peut être liée à un seul échangeur de chaleur 3 ou peut être liée à plusieurs échangeurs de chaleur 3 associés chacun à une pièce différente assurant une facilité dans la gestion du confort pièce par pièce.

Lorsqu'une seule unité extérieure 4 est liée à un seul échangeur de chaleur 3 une gestion de la répartition de chaleur dans les différentes pièces à vivre A est nécessaire.

Des registres fixes ou réglables automatiquement via la régulation, peuvent être placés sur le réseau d'insufflation gérant les différentes pièces à vivre A.

Même si ceci n'est pas représenté, l'air recyclé peut aussi être spécifiquement filtré au niveau de l'embouchure de la zone C. Le filtre est ainsi plus facilement accessible pour son changement.

On note que plus on recycle d'air, les débits entrants et sortants de l'installation étant maintenu égaux, le ventilateur du groupe de ventilation mécanique contrôlée 1 accélère de plus en plus. Il faut donc bien dimensionner ce ventilateur 1 selon le débit de recyclage ajouté du débit de ventilation. Même si ceci n'a pas été représenté, plusieurs ventilateurs peuvent être placés au niveau du réseau gérant le recyclage et l'insufflation selon différentes possibilités, par exemple pour réaliser un équilibrage des réseaux, ou pour la gestion de différentes zones de manière différentiée, et plus particulièrement en associant un ventilateur gérant le débit d'air neuf et un autre ventilateur gérant le recyclage.

Chaque pièce à vivre A peut comporter un échangeur thermodynamique en aval du groupe de ventilation mécanique contrôlée 1, chaque échangeur thermodynamique étant piloté par une sonde d'ambiance présente dans la pièce à vivre correspondante. Des registres peuvent être placés sur le réseau d'air neuf et/ou d'air recyclé pour satisfaire le besoin de qualité d'air dans chaque pièce et assurer un débit suffisant pour véhiculer la chaleur ou le froid produit par chaque échangeur.

Selon un quatrième mode de réalisation représenté sur la figure 4, lorsque le local ne nécessite que peu d'énergie, le chauffage est assuré par un échangeur air-eau 2B en communication de fluide avec le chauffe-eau 2. La cuve du chauffe-eau 2 est alors surdimensionnée.

Si l'on se réfère aux deuxième et au quatrième mode de réalisation illustrés sur les figures 2 et 4, le chauffe-eau 2 est également alimenté par de l'air prélevé dans le garage E. Il peut aussi être alimenté par de l'air prélevé dans un autre endroit que le garage. De manière plus globale, de l'air supplémentaire peut être prélevé dans les combles D, le vide sanitaire ou encore à l'extérieur au travers d'un panneau solaire, pour être préchauffé ou pour amener un surcroit de débit améliorant ainsi le coefficient de performance du chauffe-eau thermodynamique 2.

L'invention porte aussi sur un chauffe-eau qui serait en lien avec une unité thermodynamique à l'extérieur du bâtiment prélevant de l'énergie en totalité à l'extérieur de ce dernier.

L'invention concerne également un procédé de commande du débit d'air insufflé par ledit groupe de ventilation mécanique contrôlée 1 et de l'air extrait dans ledit chauffe-eau 2, par un dispositif de commande d'un tel système.

De façon générale, le débit d'air insufflé par le groupe de ventilation mécanique contrôlée 1 et le débit de l'air extrait dans ledit chauffe-eau 2 sont régulés selon le besoin lié à la qualité d'air intérieur dans lesdites pièces à vivre A et/ou selon le besoin lié à l'humidité dans lesdites pièces humides B, après analyse de la qualité de l'air dans ces pièces soit directement avec des capteurs présents dans toutes ou une partie de ces pièces, soit indirectement en analysant la qualité de l'air extrait par le chauffe-eau au niveau de ce dernier.

Le débit d'air insufflé du groupe de ventilation mécanique contrôlée 1 et le débit de l'air extrait par le chauffe-eau thermodynamique 2 peuvent être régulés pour être sensiblement égaux, le dispositif de commande du débit étant disposé préférentiellement dans le groupe de ventilation mécanique contrôlée 1 ou dans le chauffe-eau thermodynamique 2.

Le dispositif de commande peut aussi être dans aucun des deux appareils, voire même dématérialisé si les appareils sont connectés, la régulation visant à équilibrer ces débits pouvant être dans des serveurs gérant le bon fonctionnement de ces appareils selon leur environnement, à savoir la qualité d'air extérieur ou les conditions météorologiques par exemple.

Après analyse de la qualité de l'air dans les pièces, le débit maximal du débit d'air insufflé par le groupe de ventilation mécanique contrôlée 1 et du débit de l'air extrait par le chauffe-eau thermodynamique 2 peuvent être déterminés et ces deux débits sont régulés pour être égaux à ce débit maximal, de manière à subvenir au besoin de la qualité de l'air intérieur des pièces à vivre comme des pièces humides. Il va de soi que si une seule des deux zones est instrumentée en qualité de l'air intérieur, les deux débits insufflé et extrait seront directement corrélé à cette mesure.

Par ailleurs, il peut ponctuellement y avoir des demandes de l'utilisateur, par exemple une augmentation ponctuelle en chambre, en salle de bain ou en cuisine, la régulation, dans ce cas, augmente les deux débits de manière similaire.

La commande peut être effectuée selon plusieurs processus.

Le pilotage peut se faire selon un besoin des pièces humides B généralement lié à un problème d'humidité, donc en considérant l'extraction d'air comme donnée maîtresse de la commande de débits.

Dans ce cas, des bouches hydro-réglables ou des registres pilotés selon la qualité de l'air peuvent être installées sur le réseau d'extraction d'air. Une valeur de consigne de débit peut être transmis par le chauffe-eau 2 au groupe de ventilation contrôlée 1 par câblage ou radio.

Le pilotage peut également se faire selon un besoin des pièces à vivre A, généralement lié à un problème de qualité de l'air, comme le taux de CO₂, le taux de composés organiques volatils, le taux de particules fines ou l'humidité, donc en considérant l'insufflation d'air comme donnée maîtresse de la commande de débits.

Dans ce cas, le groupe de ventilation mécanique contrôlée 1 est régulé à débit constant, de manière à maintenir le débit selon l'état de colmatage du filtre 1A, 3A et une valeur de consigne du débit est transmis au chauffe-eau 2 sur son air extrait par câblage ou radio.

D'autres types de pilotage sont envisageables, par exemple un pilotage de l'insufflation ou de l'extraction selon le niveau de pression dans l'habitation. Ces types de régulation aérauliques sont maîtrisés par l'homme de métier selon les avantages recherchés.

## Revendications

1. Système de chauffage et de production d'eau chaude destiné à être installé dans une habitation comportant des pièces à vivre (A) et des pièces humides (B) en communication d'air, système comportant un groupe de ventilation mécanique contrôlée d'insufflation (1) connecté en amont à l'extérieur et un chauffe-eau thermodynamique (2) connecté en aval à l'extérieur, physiquement indépendants, **caractérisé en ce que** ledit groupe de ventilation mécanique contrôlée d'insufflation (1) est à simple flux et est connecté en aval auxdites pièces à vivre (A), **en ce que** ledit chauffe-eau (2) est connecté en amont sur l'air extrait desdites pièces humides (B) et **en ce qu'**il comporte un dispositif de commande du débit assurant la commande du débit d'air insufflé par ledit groupe de ventilation mécanique contrôlée (1) et du débit d'air extrait dudit chauffe-eau (2).

2. Système selon la revendication 1, **caractérisé en ce que** ledit groupe de ventilation mécanique contrôlée (1) est disposé dans les combles (D) de l'habitation.

3. Système selon l'une des revendications précédentes, **caractérisé en ce que** ledit groupe de ventilation mécanique contrôlée (1) comporte en amont une source chaude de préchauffage de l'air extérieur.

4. Système selon l'une des revendications précédentes, **caractérisé en ce que** ledit groupe de ventilation mécanique contrôlée (1) comporte en aval au moins un échangeur de chaleur (3).

5. Système selon l'une des revendications précédentes, **caractérisé en ce que** ledit groupe de ventilation mécanique contrôlée (1) est connecté en amont à de l'air recyclé.

6. Système selon la revendication précédente, **caractérisé en ce que** ledit groupe de ventilation mécanique contrôlée (1) comporte un dispositif de réglage de la répartition d'air extérieur extrait et d'air recyclé extrait (1B).

7. Système selon l'une des revendications précédentes, **caractérisé en ce que** chaque pièce à vivre (A) comporte un échangeur thermodynamique en aval dudit groupe de ventilation mécanique contrôlée (1), ledit échangeur thermodynamique étant piloté par une sonde d'ambiance présente dans la pièce à vivre correspondante (A).

8. Procédé de commande du débit d'air insufflé par ledit groupe de ventilation mécanique contrôlée (1) et de l'air extrait dans ledit chauffe-eau (2), par un dispositif de commande d'un système selon l'une des revendications précédentes, **caractérisé en ce que** le débit d'air insufflé par ledit groupe de ventilation mécanique contrôlée (1) et le débit de l'air extrait dans ledit chauffe-eau (2) sont régulés selon le besoin lié à la qualité d'air intérieur dans lesdites pièces à vivre (A) et/ou selon le besoin lié à l'humidité dans lesdites pièces humides (B).

9. Procédé selon la revendication précédente, **caractérisé en ce que** le débit d'air insufflé par ledit groupe de ventilation mécanique contrôlée (1) et le débit de l'air extrait dans ledit chauffe-eau thermodynamique (2) sont régulés pour être sensiblement égaux.

10. Procédé de commande selon la revendication 8 ou 9, **caractérisé en ce que** le débit maximal du débit d'air insufflé par ledit groupe de ventilation mécanique contrôlée (1) et du débit de l'air extrait dans ledit chauffe-eau (2) sont déterminés en fonction dudit besoin lié à la qualité d'air intérieur et ces deux débits sont régulés pour être égaux à ce débit maximal.

## Patentansprüche

1. System zum Heizen und zur Warmwasserbereitung, das ausgelegt ist, um in einer Wohnung installiert zu sein, die Wohnräume (A) und Feuchträume (B) umfasst, die in Luftverbindung stehen, wobei das System ein Bauelement zur gesteuerten mechanischen Belüftung durch Einblasen (1) umfasst, das vorgelagert an die Außenseite verbunden ist, und einen thermodynamischen Wassererhitzer (2), der nachgelagert an die Außenseite verbunden ist, die physisch unabhängig voneinander sind, **dadurch gekennzeichnet, dass** das Bauelement zur gesteuerten mechanischen Belüftung durch Einblasen (1) mit einfacher Strömung ist und nachgelagert mit den Wohnräumen (A) verbunden ist, und dadurch, dass der Wassererhitzer (2) vorgelagert auf der extrahierten Luft der Feuchträume (B) verbunden ist, und dadurch, dass es eine Vorrichtung zu Steuerung des Durchsatzes umfasst, die die Steuerung des Durchsatzes von eingeblasener Luft, durch das Bauelement zur gesteuerten mechanischen Belüftung (1) und des Durchsatzes von extrahierter Luft des Wassererhitzers (2) sicherstellt.

2. System nach Anspruch 1, **dadurch gekennzeichnet, dass** das Bauelement zur gesteuerten mechanischen Belüftung (1) im Dachboden (D) der Wohnung angeordnet ist.

3. System nach einem der vorhergehenden Ansprüche, **dadurch gekennzeichnet, dass** das Bauelement zur gesteuerten mechanischen Belüftung (1) vorgelagert eine warme Quelle zur Vorerwärmung der Außenluft umfasst.

4. System nach einem der vorhergehenden Ansprüche, **dadurch gekennzeichnet, dass** das Bauelement zur gesteuerten mechanischen Belüftung (1) nachgelagert mindestens einen Wärmetauscher (3) umfasst.

5. System nach einem der vorhergehenden Ansprüche, **dadurch gekennzeichnet, dass** das Bauelement zur gesteuerten mechanischen Belüftung (1) vorgelagert an recyclete Luft verbunden ist.

6. System nach dem vorhergehenden Anspruch, **dadurch gekennzeichnet, dass** das Bauelement zur gesteuerten mechanischen Belüftung (1) eine Vorrichtung zur Regelung der Verteilung von extrahierter Außenluft und extrahierter recycelter Luft (1B) umfasst.

7. System nach einem der vorhergehenden Ansprüche, **dadurch gekennzeichnet, dass** jeder Wohnraum (A) einen thermodynamischen Tauscher nachgelagert von dem Bauelement zur gesteuerten mechanischen Belüftung (1) umfasst, wobei der thermodynamische Tauscher von einem Raumsensor gelenkt wird, der im entsprechenden Wohnraum (A) vorhanden ist.

8. Verfahren zur Steuerung des Durchsatzes von eingeblasener Luft durch das Bauelement zur gesteuerten mechanischen Belüftung (1) und der extrahierten Luft in dem Wassererhitzer (2) durch eine Vorrichtung zur Steuerung eines Systems nach einem der vorhergehenden Ansprüche, **dadurch gekennzeichnet, dass** der Durchsatz von eingeblasener Luft durch das Bauelement zur gesteuerten mechanischen Belüftung (1) und der Durchsatz von extrahierter Luft in dem Wassererhitzer (2) gemäß der Anforderung verbunden mit der Qualität der Innenluft in den Wohnräumen (A) und/oder gemäß der Anforderung verbunden mit der Feuchtigkeit in den Feuchträumen (B) geregelt sind.

9. Verfahren nach dem vorhergehenden Anspruch, **dadurch gekennzeichnet, dass** der Durchsatz von eingeblasener Luft durch das Bauelement zur gesteuerten mechanischen Belüftung (1) und der Durchsatz von extrahierter Luft in dem thermodynamischen Wassererhitzer (2) geregelt sind, um im Wesentlichen gleich zu sein.

10. Verfahren nach Anspruch 8 oder 9, **dadurch gekennzeichnet, dass** der maximale Durchsatz des Durchsatzes von eingeblasener Luft durch das Element zur gesteuerten mechanischen Belüftung (1) und der Durchsatz von extrahierter Luft in dem Wassererhitzer (2) je nach der Anforderung, verbunden mit der Qualität der Innenluft, geregelt sind, und diese zwei Durchsätze geregelt sind, um gleich dem maximalen Durchsatz zu sein.

## Claims

1. A system for heating and hot-water production intended to be installed in a dwelling including living rooms (A) and damp rooms (B) in air communication, the system including a controlled blower mechanical ventilation unit (1) connected upstream to the outside and a thermodynamic water heater (2) connected downstream to the outside, said units being physically independent, **characterized in that** said controlled blower mechanical ventilation unit (1) has a single stream and is connected downstream to said living rooms (A), **in that** said water heater (2) is connected upstream on the air extracted from said damp rooms (B) and **in that** it includes a device for controlling the flow rate ensuring control of the air flow rate blown by said controlled mechanical ventilation unit (1) and the air flow rate extracted from said water heater (2).

2. The system according to claim 1, **characterized in that** said controlled mechanical ventilation unit (1) is arranged in the attic spaces (D) of the dwelling.

3. The system according to one of the preceding claims, **characterized in that** said controlled mechanical ventilation unit (1) includes, upstream, a heat source for preheating the outside air.

4. The system according to one of the preceding claims, **characterized in that** said controlled mechanical ventilation unit (1) includes, downstream, at least one heat exchanger (3).

5. The system according to one of the preceding claims, **characterized in that** said controlled mechanical ventilation unit (1) is connected upstream to recycled air.

6. The system according to the preceding claim, **characterized in that** said controlled mechanical ventilation unit (1) includes a device for adjusting the distribution of extracted outside air and extracted recycled air (1B).

7. The system according to any one of the preceding claims, **characterized in that** each living room (A) includes a thermodynamic exchanger downstream from said controlled mechanical ventilation unit (1), said thermodynamic exchanger being controlled by an atmosphere probe present in the corresponding living room (A).

8. A method for controlling the air flow rate blown by said controlled mechanical ventilation unit (1) and extracted air in said water heater (2), by a device for controlling a system according to one of the preceding claims, **characterized in that** the air flow rate blown by said controlled mechanical ventilation unit (1) and the air flow rate extracted in said water heater (2) are regulated based on the need related to the indoor air quality in said living rooms (A) and/or depending on the need related to humidity in said damp rooms (B).

9. The method according to the preceding claim, **characterized in that** the air flow rate blown by said controlled mechanical ventilation unit (1) and the flow rate of the air extracted in said thermodynamic water heater (2) are regulated to be substantially equal.

10. The control method according to claim 8 or 9, **characterized in that** the maximum flow rate of the air flow rate blown by said controlled mechanical ventilation unit (1) and the flow rate of the air extracted in said water heater (2) are determined as a function of said need related to the inside air quality, and these two flow rates are regulated to be equal to this maximum flow rate.
